# EUROPEAN PATENT SPECIFICATION

(11) **EP 4 542 885 B1**
(45) Date of publication and mention of the grant of the patent: **07.10.2026**
(21) Application number: 23881803.3
(22) Date of filing: 24.10.2023
(51) Int. Cl.: H04B 17/318

(54) **BLUETOOTH RANGING METHOD AND SYSTEM, AND ELECTRONIC DEVICE**
BLUETOOTH-ENTFERNUNGSMESSVERFAHREN UND -SYSTEM SOWIE ELEKTRONISCHE VORRICHTUNG
PROCÉDÉ ET SYSTÈME DE TÉLÉMÉTRIE BLUETOOTH, ET DISPOSITIF ÉLECTRONIQUE

(30) Priority: 25.10.2022 CN 202211311517
(43) Date of publication of application: 23.04.2025
(73) Proprietor: Huawei Technologies Co., Ltd., Shenzhen, Guangdong 518129 (CN)
(72) Inventor: FAN, Doudou, Shenzhen, Guangdong 518129 (CN); PENG, Hongxing, Shenzhen, Guangdong 518129 (CN); LI, Shiming, Shenzhen, Guangdong 518129 (CN); YAO, Si, Shenzhen, Guangdong 518129 (CN)
(74) Representative: Isarpatent
(86) International application number: PCT/CN2023/126062
(87) International publication number: WO 2024/088225

(56) References cited:
- WO-A1-2016/138800
- CN-A- 111 050 275
- CN-A- 111 194 000
- CN-A- 114 363 808
- CN-A- 114 727 384

## Description

### TECHNICAL FIELD

This disclosure generally relates to the technical field of terminal technologies.

The invention in particular relates to a Bluetooth ranging method, an electronic device, and a computer-readable storage medium.

### BACKGROUND

With gradual development of distributed operating systems, multi-device collaboration gradually becomes a very important part in improving user experience. If a distance between collaborative devices can be sensed in a timely manner, it is more conducive to determining a degree of attention paid by a user to the collaborative devices, so that a developer can design a more personalized software program.

How to measure a distance between two collaborative devices is an urgent problem to be resolved in the industry.

The technical problem addressed in CN 111 050 275 A is the poor positioning accuracy of Bluetooth-based indoor positioning systems that rely on RSSI (Received Signal Strength Indicator) values. The main issue addressed is that Bluetooth signals are subject to fluctuations and "jumps," leading to deviations in positioning results. The document proposes a Bluetooth positioning method based on RSSI characteristic values that introduces a "credibility weight" for each beacon's RSSI value, determined via a reference gateway.

Also CN 111 194 000 A addresses the inaccuracy and instability of indoor Bluetooth distance measurement (ranging) systems that rely on RSSI (Received Signal Strength Indicator) values, in particular that RSSI values fluctuate significantly due to environmental factors and noise, leading to unreliable distance estimates. This document proposes a distance measurement method and system based on Bluetooth that combines an improved hybrid filtering algorithm (KGMM weighted hybrid filtering) with a multi-layer neural network.

### SUMMARY

The object of the present invention is to provide a Bluetooth ranging method, an electronic device, and a computer-readable storage medium such that a distance between devices can be accurately measured, to improve user experience. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to the Bluetooth ranging method, a ranging device obtains a distance between two devices based on an RSSI of a Bluetooth signal of a collaborative device and a Bluetooth ranging model. The Bluetooth ranging model is obtained through processing based on weights corresponding to a plurality of spatial positions.

According to a first aspect according to the invention, the invention provides a Bluetooth ranging method, wherein the method includes:

A response device establishes a Bluetooth communication connection to a request device;
the response device measures signal strength of a ranging request after receiving the ranging request sent by the request device, to obtain a first received signal strength indication RSSI;
the response device obtains a first distance based on the first RSSI and a Bluetooth ranging model, where the Bluetooth ranging model is obtained through fitting based on a correspondence between a preset distance from the request device and a modified RSSI at the preset distance; and the modified RSSI is obtained by processing a plurality of RSSIs measured at a plurality of different spatial positions at a same distance from the request device when the request device broadcasts a Bluetooth signal, and weights corresponding to each of the plurality of spatial positions; and
the response device sends the first distance to the request device.

In this embodiment of this application, a distance between devices is determined by using the Bluetooth ranging model, where the Bluetooth ranging model is obtained based on weights of different spatial positions. Therefore, this can improve ranging accuracy of a specific spatial position, and improve user experience. This embodiment of this application is applicable to a mobile terminal device, and can improve ranging accuracy in a collaboration process of mobile devices.

In addition, because Bluetooth low energy is widely present in various terminal devices, in most scenarios, if inter-device collaboration is required, a communication function of the Bluetooth low energy needs to be used. In this embodiment of this application, an approximate distance between devices may be calculated by analyzing some inherent parameters of a Bluetooth module without adding another ranging device. This can reduce additional power consumption in ranging.

It may be understood that, in this application, when a device needs to perform Bluetooth communication, ranging can be implemented by adding a Bluetooth received signal strength parameter without adding another ranging device.

With reference to the first aspect, in a possible implementation, the modified RSSI is obtained by adding products obtained after the plurality of RSSIs are respectively multiplied by the weights corresponding to the plurality of spatial positions.

With reference to the first aspect, in a possible implementation, when the response device is at different positions and is at a same distance from the request device, values of the first distance are different.

With reference to the first aspect, in a possible implementation, when a spatial position of the response device relative to the request device is a first spatial position, the first distance is d1, and a weight of the first spatial position is a first weight; and when a spatial position of the response device relative to the request device is a second spatial position, the first distance is d2, and a weight of the second spatial position is a second weight, where the first weight is higher than the second weight; and
when distances from the first spatial position and the second spatial position to the request device are both d, a difference between d1 and d is less than a difference between d2 and d, where d1, d2, and d are all positive numbers.

A spatial position is a relative position between two devices. For example, the spatial position of the response device relative to the request device is the first spatial position, that is, the response device is located on the left of the request device.

In this embodiment of this application, because weights of spatial positions are different during fitting of the Bluetooth ranging model, the Bluetooth ranging model has different distance accuracy for different spatial positions. Therefore, a ranging capability is higher at a spatial position with a higher weight.

With reference to the first aspect, in a possible implementation, a weight of the spatial position is obtained, when a user uses the request device to perform Bluetooth communication with another device, based on position data of the another device.

In this embodiment of this application, the spatial weight may be determined based on a user habit of using the collaborative device by the user, to improve user experience. The method can be used to analyze collaborative orientations of devices commonly used by the user, and divide and correct weights of different spatial states of the devices, so that the method can provide better experience in the commonly used orientations of the user.

In a possible implementation, the weight of the spatial position may be determined based on a preferred position of the collaborative device when the user uses the ranging device. It is assumed that when the user uses the ranging device to collaborate with the collaborative device, the collaborative device is usually located on the left or the right of the ranging device. In this case, weights of spatial positions on the left or the right of the ranging device may be increased, and a weight of another spatial position may be decreased.

With reference to the first aspect, in a possible implementation, that the response device obtains a first distance based on the first RSSI and a Bluetooth ranging model includes:
The response device inputs the first RSSI into the Bluetooth ranging model, to obtain a second distance; and
the response device processes the second distance when determining that the response device is located in a preset gain direction of a Bluetooth antenna of the request device, to obtain the first distance.

In this embodiment of this application, the gain direction of the Bluetooth antenna is considered, so that accuracy of the first distance can be improved.

With reference to the first aspect, in a possible implementation, that the response device processes the second distance when determining that the response device is located in a preset gain direction of a Bluetooth antenna of the request device includes:
The response device multiplies the second distance by a preset value when determining that the response device is located in a maximum gain direction of the Bluetooth antenna of the request device, to obtain the first distance.

Considering that an RSSI is stronger when the response device is located in the maximum gain direction of the Bluetooth antenna of the request device and accordingly an obtained distance is smaller, in this embodiment of this application, an obtained distance is multiplied by a correction coefficient greater than 1, to obtain a more accurate distance.

In a possible implementation, the response device multiplies the second distance by a correction coefficient when determining that the response device is located in a maximum gain direction of the Bluetooth antenna of the request device, to obtain the first distance. The correction coefficient may be a value less than 1.

With reference to the first aspect, in a possible implementation, the first RSSI includes at least two RSSI parameters, and the method further includes:
The response device calculates a change rate of the at least two RSSI parameters; and
when the change rate of the at least two RSSI parameters exceeds a preset threshold, the response device determines that the response device is located in the maximum gain direction of the Bluetooth antenna of the request device.

With reference to the first aspect, in a possible implementation, that the response device measures signal strength of a ranging request after receiving the ranging request sent by the request device, to obtain a first received signal strength indication RSSI includes:
The response device measures the signal strength of a ranging request after receiving the ranging request sent by the request device, to obtain a second RSSI; and
the response device performs filtering on the second RSSI, to obtain the first RSSI.

In this embodiment of this application, filtering may be performed in response to a fluctuation phenomenon of a measured RSSI value, to obtain a stable and smooth first RSSI. A filtering method for determining a target RSSI is not limited in this embodiment of this application. The filtering method includes but is not limited to a data processing method, like mean filtering, Gaussian filtering, a combination of median filtering and Gaussian filtering, or the like.

According to a second aspect according to the invention, the invention also provides another Bluetooth ranging method. This method includes:
The request device establishes a Bluetooth communication connection to a response device;
the request device sends a parameter request to the response device, where the parameter request is used to request to measure signal strength of the parameter request to obtain a first received signal strength indication RSSI;
the request device receives the first RSSI sent by the response device; and
the request device obtains a first distance based on the first RSSI and a Bluetooth ranging model, where the Bluetooth ranging model is obtained through fitting based on a correspondence between a preset distance from the request device and a modified RSSI at the preset distance; and the modified RSSI is obtained by processing a plurality of RSSIs measured at a plurality of different spatial positions at a same distance from the request device when the request device broadcasts a Bluetooth signal, and weights corresponding to each of the plurality of spatial positions.

In this embodiment of this application, a distance between devices is determined by using the Bluetooth ranging model, where the Bluetooth ranging model is obtained based on weights of different spatial positions. Therefore, this can improve ranging accuracy of a specific spatial position, and improve user experience. This embodiment of this application is applicable to a mobile terminal device, and can improve ranging accuracy in a collaboration process of mobile devices.

In addition, because Bluetooth low energy is widely present in various terminal devices, in most scenarios, if inter-device collaboration is required, a communication function of the Bluetooth low energy needs to be used. In this embodiment of this application, an approximate distance between devices may be calculated by analyzing some inherent parameters of a Bluetooth module without adding another ranging device. This can reduce additional power consumption in ranging.

With reference to the second aspect, in a possible implementation, the modified RSSI is obtained by adding products obtained after the plurality of RSSIs are respectively multiplied by the weights corresponding to the plurality of spatial positions.

With reference to the second aspect, in a possible implementation, when the response device is at different positions and is at a same distance from the request device, values of the first distance are different.

With reference to the second aspect, in a possible implementation, a weight of the spatial position is obtained, when a user uses the request device to perform Bluetooth communication with another device, based on position data of the another device.

With reference to the second aspect, in a possible but not claimed implementation, that the request device obtains a first distance based on the first RSSI and a Bluetooth ranging model includes:
The request device inputs the first RSSI into the Bluetooth ranging model, to obtain a second distance; and
the request device processes the second distance when determining that the response device is located in a preset gain direction of a Bluetooth antenna of the request device, to obtain the first distance.

With reference to the second aspect, in a possible but not claimed implementation, that the request device processes the second distance when determining that the response device is located in a preset gain direction of a Bluetooth antenna of the request device includes:
The request device multiplies the second distance by a preset value when determining that the response device is located in a maximum gain direction of the Bluetooth antenna of the request device, to obtain the first distance.

With reference to the second aspect, in a possible but not claimed implementation, the first RSSI includes at least two RSSI parameters, and the method further includes:
The request device calculates a change rate of the at least two RSSI parameters; and
when the change rate of the at least two RSSI parameters exceeds a preset threshold, the request device determines that the response device is located in the maximum gain direction of the Bluetooth antenna of the request device.

According to a third aspect according to the invention, the invention also provides an electronic device, including one or more functional modules. The one or more functional modules may be configured to perform the Bluetooth ranging method according to any one of the possible implementations of the first aspect.

According to a fourth aspect, an embodiment of this application provides an electronic device, including one or more functional modules. The one or more functional modules may be configured to perform the Bluetooth ranging method according to any one of the possible implementations of the second aspect.

According to a fifth aspect according to the invention, the invention further provides a computer storage medium, including computer instructions. When the computer instructions are run on an electronic device, a communication apparatus is enabled to perform the Bluetooth ranging method according to any one of the possible implementations of the first aspect.

According to a sixth aspect, this application provides a computer storage medium, including computer instructions. When the computer instructions are run on an electronic device, a communication apparatus is enabled to perform the Bluetooth ranging method according to any one of the possible implementations of the second aspect.

According to a seventh but not claimed aspect, this application provides a computer program product. When the computer program product is run on a computer, the computer is enabled to perform the Bluetooth ranging method according to any one of the possible implementations of the first aspect.

According to an eighth but not claimed aspect, this application provides a computer program product. When the computer program product is run on a computer, the computer is enabled to perform the Bluetooth ranging method according to any one of the possible implementations of the second aspect.

According to a ninth but not claimed aspect, this application provides a chip, including a processor and an interface. The processor and the interface cooperate with each other, so that the chip performs the Bluetooth ranging method according to any one of the possible implementations of the first aspect.

According to a tenth but not claimed aspect, this application provides a chip, including a processor and an interface. The processor and the interface cooperate with each other, so that the chip performs the Bluetooth ranging method according to any one of the possible implementations of the second aspect.

It may be understood that the electronic devices provided in the third aspect and the fourth aspect, the computer-readable storage media provided in the fifth aspect and the sixth aspect, the computer program products provided in the seventh aspect and the eighth aspect, and the chips provided in the ninth aspect and the tenth aspect are all configured to perform the method provided in embodiments of this application. Therefore, for beneficial effects that can be achieved by the electronic devices, the computer-readable storage media, the computer program products, and the chips, refer to the beneficial effects in the corresponding methods. Details are not described herein again.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a diagram of a Bluetooth ranging system according to an embodiment of this application;
FIG. 2 is a diagram of a Bluetooth ranging system in a multi-device collaboration scenario according to an embodiment of this application;
FIG. 3 is a diagram of a hardware structure of an electronic device 100 according to an embodiment of this application;
FIG. 4 is a block diagram of a software structure of an electronic device 100 according to an embodiment of this application;
FIG. 5A is a diagram of a hardware structure of an electronic device 200 according to an embodiment of this application;
FIG. 5B is a flowchart of a Bluetooth ranging method according to an embodiment of this application;
FIG. 6 is a flowchart of another Bluetooth ranging method according to an embodiment of this application;
FIG. 7 is a flowchart of a method for determining a Bluetooth ranging model according to an embodiment of this application;
FIG. 8 is a diagram of different spatial positions according to an embodiment of this application;
FIG. 9 is a diagram of a weight of a spatial position according to an embodiment of this application;
FIG. 10 is a diagram of another Bluetooth ranging method according to an embodiment of this application; and
FIG. 11 is a flowchart of yet another Bluetooth ranging method according to an embodiment of this application.

### DESCRIPTION OF EMBODIMENTS

The following describes the technical solutions in embodiments of this application clearly with reference to the accompanying drawings. In descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is usually represented in the form of a graphical user interface (graphical user interface, GUI), and is a user interface that is related to a computer operation and that is displayed in a graphic manner. The user interface may be a visual interface element, for example, a text, an icon, a button, a menu, a tab, a text box, a dialog box, a status bar, a navigation bar, or a Widget that is displayed on a display of an electronic device.

Currently, all Bluetooth ranging methods are used in an indoor scenario. An existing Bluetooth ranging method usually considers a problem that a Bluetooth signal value fluctuates or is singular due to factors such as multipath, reflection, and non-line-of-sight in an indoor propagation process of a Bluetooth signal. Therefore, a ranging model is piecewise fitted by using a least squares method based on an actual environment, and ranging information is further obtained based on the fitted ranging model and a processed received signal strength indication (Received Signal Strength Indication, RSSI). However, because the method is for an indoor Bluetooth ranging scenario, in the method, a Bluetooth transmit node may be disposed in a determined position direction without considering a factor like directivity of Bluetooth antenna transmission. In addition, in the method, a transmit source of a Bluetooth device is in a static state, and a scenario in which the transmit source is mobile is not considered.

Because the foregoing Bluetooth ranging method is for an indoor fixed device, it is found that when the Bluetooth device is mobile, a distance measured by using the foregoing Bluetooth ranging method is inaccurate, and cannot meet a user requirement.

Therefore, embodiments of this application provide a Bluetooth ranging method and system, and an electronic device. In the method, a Bluetooth ranging model is obtained through fitting based on weights of a plurality of spatial positions, so that a distance between devices can be accurately measured, improving user experience.

This application may be applied to a two-device collaboration scenario or a multi-device collaboration scenario, for example, a screen projection scenario, or a remote control scenario. For example, in a future cockpit scenario, terminal devices around a transmit end may include a head-up display, a liquid crystal dashboard, a vehicle-mounted central control screen, and the like. All these may be used as a receive end in embodiments of this application. For another example, when the transmit end is a projection device, the receive end may be a projected device, and may include a tablet computer, a personal computer, a television, a head unit, a smartwatch, a headset, a speaker, a virtual reality device, an augmented reality device, and the like. Alternatively, more other devices may be reduced or added based on an actual requirement.

To describe the Bluetooth ranging method provided in embodiments of this application more clearly and in detail, the following first describes the Bluetooth ranging system 10 provided in an embodiment of this application.

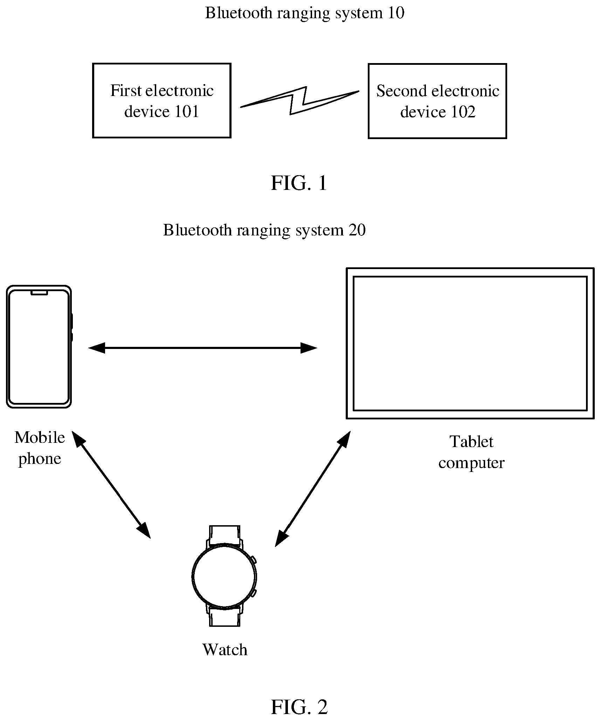

FIG. 1 is a diagram of an architecture of a Bluetooth ranging system 10 according to an embodiment of this application. As shown in FIG. 1, the Bluetooth ranging system 10 may include a first electronic device 101 and a second electronic device 102.

The first electronic device 101 may communicate with the second electronic device 102 by using Bluetooth technologies (including classic Bluetooth BR/EDR (Basic Rate/Enhanced Data Rate), or Bluetooth low energy (BLE)). Further, in a communication process, the first electronic device 101 or the second electronic device 102 may measure a distance between the two devices.

In some embodiments, in a process in which the first electronic device 101 or the second electronic device 102 performs Bluetooth communication, the first electronic device 101 may send a ranging request to the second electronic device 102. Further, the second electronic device 102 measures signal strength of the ranging request after receiving the ranging request sent by the first electronic device 101, to obtain a first received signal strength indication RSSI. The second electronic device 102 obtains a first distance based on the first RSSI and a Bluetooth ranging model. The Bluetooth ranging model is obtained through fitting based on a correspondence between a preset distance from the first electronic device 101 and a modified RSSI at the preset distance. The modified RSSI is obtained by processing a plurality of RSSIs measured at a plurality of spatial positions at a same distance from the first electronic device 101 when the first electronic device 101 broadcasts a Bluetooth signal, and weights corresponding to the plurality of spatial positions. The second electronic device 102 sends the first distance to the first electronic device 101. In this case, the first electronic device 101 and the second electronic device 102 may adjust respective collaboration states based on the distance between the first electronic device 101 and the second electronic device 102. For example, a prompt message is provided, so that the user adjusts the distance.

For a specific process of fitting the Bluetooth ranging model and a specific process of obtaining the first distance, refer to related content in the following embodiments. Details are not described herein.

The first electronic device 101 may be a terminal device that supports a Bluetooth function, for example, a mobile phone, a notebook computer, or a palmtop computer. The second electronic device 102 may also be a terminal device that supports a Bluetooth function, for example, a mobile phone, a notebook computer, or a palmtop computer. The second electronic device 102 may alternatively be a peripheral device that supports a Bluetooth function, for example, a wireless headset, a smart speaker, or a smartwatch.

In this embodiment of this application, the first electronic device 101 and the second electronic device 102 each may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, and/or a smart city device.

It should be noted that the Bluetooth ranging system 10 shows only two devices as an example.

In this embodiment of this application, the Bluetooth ranging system may include a plurality of devices. FIG. 2 shows an example of a Bluetooth ranging system 20 in a multi-device collaboration scenario.

As shown in FIG. 2, the system may include a mobile phone, a tablet computer, and a watch. The mobile phone establishes a Bluetooth connection to the watch. The mobile phone establishes a Bluetooth connection to the tablet computer. The watch establishes a Bluetooth connection to the tablet computer.

In an implementation, a measurement device may be any one of the three devices. For example, the measurement device may be one of the three devices that has a strongest computing capability. Alternatively, all the three devices may be measurement devices. For example, if the measurement device is a mobile phone, after connection through Bluetooth, the mobile phone measures a first distance from the watch and a second distance from the tablet computer. The mobile phone may send the first distance to the watch and send the second distance to the tablet computer.

In some other embodiments, in the multi-device collaboration scenario, one primary device may be separately connected to a plurality of secondary devices. For example, the mobile phone is a primary device, and the mobile phone separately establishes a Bluetooth connection to collaborative devices such as a watch, a tablet computer, and a speaker.

It may be understood that this application may be applied to a spatial multi-device collaboration application scenario, for example, a home scenario and an office scenario. In addition to normal Bluetooth communication, a ranging capability is added to identify a distance between devices, to better analyze a collaboration state of each device.

First, a hardware structure and a software architecture of a first electronic device 101 are described by using examples.

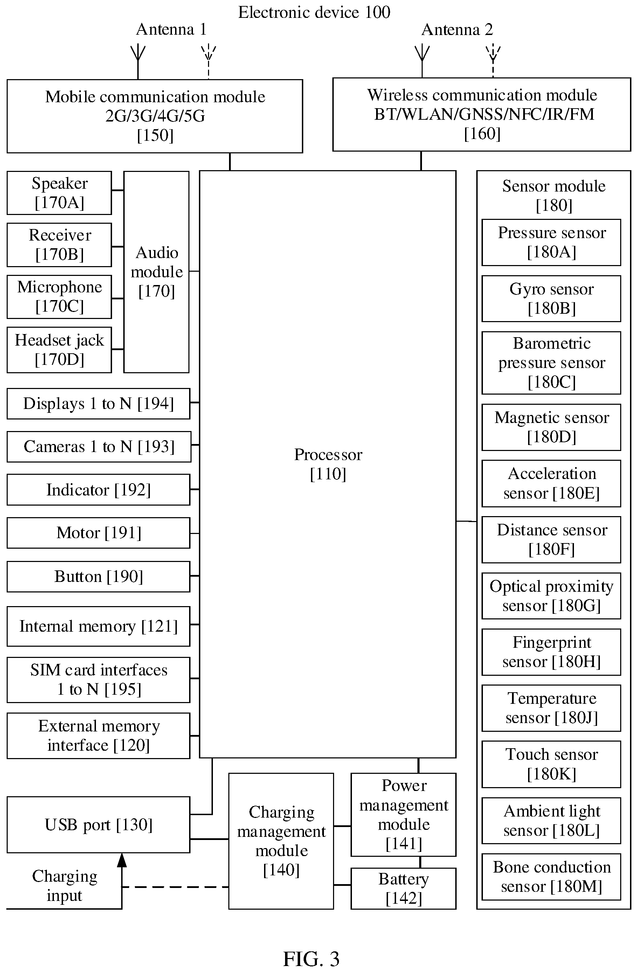

FIG. 3 is a diagram of a hardware structure of an electronic device 100.

The following uses an example in which the first electronic device 101 is the electronic device 100 to specifically describe an embodiment. It should be understood that, the electronic device 100 may have more or fewer components than those shown in the figure, may combine two or more components, or may have a different component configuration. Components shown in the figure may be implemented by hardware, software, or a combination of hardware and software, including one or more signal processing and/or application-specific integrated circuits.

The electronic device 100 may include: a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured for audio communication, and analog signal sampling, quantization, and coding. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like. The GPIO interface may be further configured as the I2C interface, the I2S interface, the UART interface, the MIPI interface, or the like.

The SIM interface may be configured to communicate with the SIM card interface 195, to implement a function of transmitting data to a SIM card or reading data in a SIM card.

The USB port 130 is a port that conforms to a USB standard specification, and may be specifically a mini USB port, a micro USB port, a USB Type-C port, or the like. The USB port 130 may be configured to connect to a charger to charge the electronic device 100, or may be configured to transmit data between the electronic device 100 and a peripheral device, or may be configured to connect to a headset, to play audio by using the headset. The port may be further configured to connect to another electronic device like an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger.

The power management module 141 is configured to connect the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in the same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, or the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like.

In some embodiments, the electronic device 100 may include one or N displays 194, where N is a positive integer greater than 1.

The electronic device 100 can implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV.

In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to: compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 implements various function applications and data processing of the electronic device 100 by running the instructions stored in the internal memory 121. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100.

In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: encode and decode an audio signal.

In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may listen to music or answer a hands-free call by using the speaker 170A.

The receiver 170B, also referred to as an "earpiece", is configured to convert an electrical audio signal into a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending speech information, a user may place the mouth of the user near the microphone 170C to make a sound, to input a sound signal to the microphone 170C. At least one microphone 170C may be disposed in the electronic device 100.

In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may calculate a touch position based on a detection signal of the pressure sensor 180A. In some embodiments, touch operations that are performed at a same touch position but have different touch operation intensity may correspond to different operation instructions.

For example, when a touch operation whose touch operation intensity is less than a first pressure threshold is performed on a messages icon, an instruction for viewing an SMS message is executed. When a touch operation whose touch operation intensity is greater than or equal to the first pressure threshold is performed on the messages icon, an instruction for creating a new SMS message is executed.

The gyro sensor 180B may be configured to determine a motion posture of the electronic device 100. In some embodiments, an angular velocity of the electronic device 100 around three axes (that is, axes x, y, and z) may be determined by using the gyro sensor 180B. The gyro sensor 180B may be configured to implement image stabilization during photographing.

For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature like automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application like switching between landscape mode and portrait mode or a pedometer.

The distance sensor 180F is configured to measure a distance. The electronic device 100 may measure a distance in an infrared manner or a laser manner. In some embodiments, in a photographing scenario, the electronic device 100 may use the distance sensor 180F for ranging, to implement quick focusing.

The optical proximity sensor 180G may include a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode.

When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown due to a low temperature.

The touch sensor 180K is also referred to as a "touch panel". The touch sensor 180K may be disposed on the display 194, and the touch sensor 180K and the display 194 form a touchscreen. The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a position different from a position of the display 194.

The button 190 includes a power button, a volume button, and the like. The button 190 may be a mechanical button, or may be a touch button. The electronic device 100 may receive a button input, and generate a button signal input related to user settings and function control of the electronic device 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. For touch operations performed on different areas of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status and a power change, or may be configured to synthesize requests, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 is compatible with different types of SIM cards. The SIM card interface 195 is also compatible with an external storage card. The electronic device 100 interacts with a network through the SIM card, to implement functions such as calling and data communication.

In this embodiment of this application, the electronic device 100 may perform the Bluetooth ranging method by using the processor 110 and the wireless communication module 160. Some content of the method in an embodiment of this application implemented by the wireless communication module 160 of the electronic device 100 shown in FIG. 3 may be specifically performed by a Bluetooth module or a Bluetooth chip.

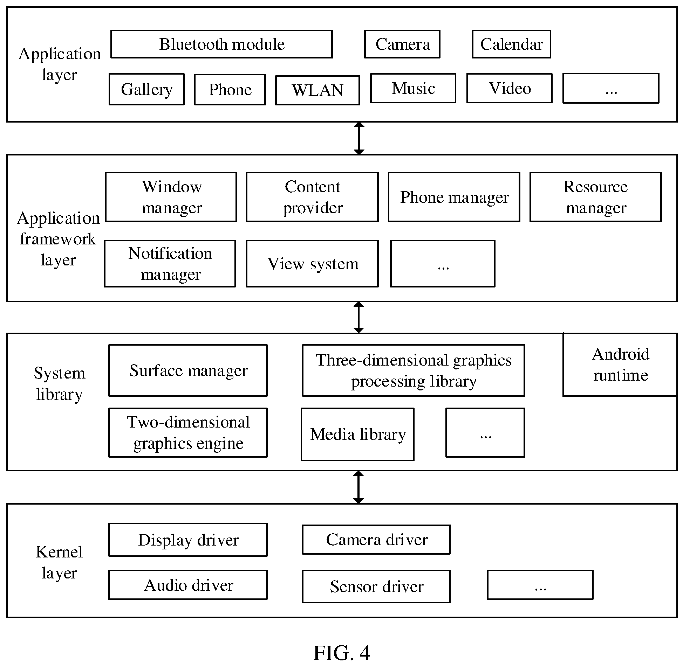

FIG. 4 is a block diagram of a software structure of an electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, a runtime (runtime) and system library, and a kernel layer from top to bottom.

The application layer may include a series of application packages.

As shown in FIG. 4, the application layer further includes a Bluetooth module. The application package may include application programs (which may also be referred to as applications) such as camera, gallery, calendar, phone, map, navigation, WLAN, music, video, and messages.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, audio, calls that are made and answered, a browsing history and bookmarks, an address book, and the like.

The view system includes visual controls, such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides, for an application, various resources such as a localized character string, an icon, a picture, a layout file, and a video file.

The notification manager enables an application to display notification information in the status bar, and may be configured to transmit a notification-type message. The displayed information may automatically disappear after a short pause without user interaction. For example, the notification manager is configured to notify download completion, provide a message notification, and the like. The notification manager may alternatively display a notification in the form of a chart or a scroll bar text in a status bar at the top of the system, for example, a notification of an application program running on a background, or may display a notification in the form of a dialog interface on the screen. For example, text information is displayed in the status bar, an announcement is given, the electronic device vibrates, or the indicator light blinks.

The runtime (runtime) includes a core library and a virtual machine. The runtime is responsible for scheduling and management of the system.

The core library includes two parts: a function that needs to be invoked by a programming language (for example, Java language), and a system core library.

The application layer and the application framework layer run on a virtual machine. The virtual machine executes programming files (for example, Java files) of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem, and provide fusion of 2-dimensional (2-Dimensional, 2D) and 3-dimensional (3-Dimensional, 3D) layers to a plurality of application programs.

The media library supports playing and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement drawing of 3D graphics, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

The following describes an example of a working process of software and hardware of the electronic device 100 with reference to a photo capture scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch tap operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

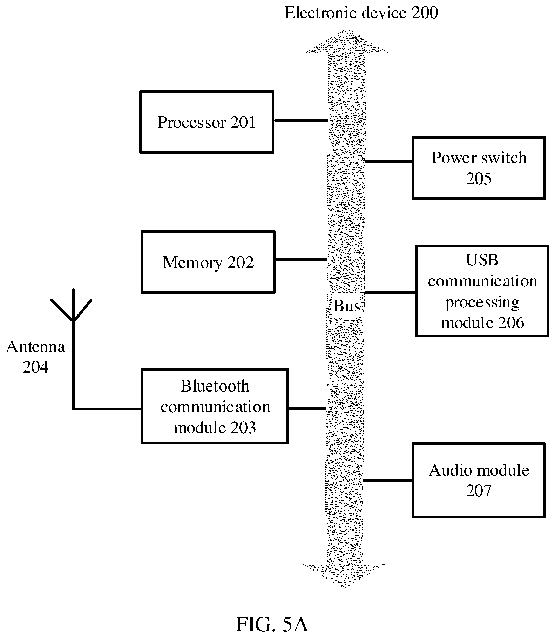

In this embodiment of this application, when the second electronic device 102 is a mobile phone, a notebook computer, or a palmtop computer, a diagram of a structure of the second electronic device may be similar to that of the electronic device 100. Details are not described herein again. When the second electronic device 102 is a device like a wireless headset, a smart speaker, or a smartwatch, for a diagram of a structure of the second electronic device 102, refer to an electronic device 200 shown in FIG. 5A.

FIG. 5A is a diagram of a structure of an electronic device 200 according to an embodiment of this application.

The following specifically describes embodiments by using the electronic device 200 as an example. It should be understood that the electronic device 200 shown in FIG. 5A is only an example, and the electronic device 200 may have more or fewer components than those shown in FIG. 5A, or may combine two or more components, or may have different component configurations. Components shown in the figure may be implemented by hardware, software, or a combination of hardware and software, including one or more signal processing and/or application-specific integrated circuits.

As shown in FIG. 5A, the electronic device 200 may include a processor 201, a memory 202, a Bluetooth communication module 203, an antenna 204, a power switch 205, a USB communication processing module 206, and an audio module 207.

The processor 201 may be configured to read and perform a computer readable instruction. During specific implementation, the processor 201 may mainly include a controller, an arithmetic unit, and a register. The controller is mainly responsible for decoding instructions and sending a control signal for an operation corresponding to the instructions. The arithmetic unit is mainly responsible for saving a quantity of register operations, intermediate operation results, and the like that are temporarily stored during instruction execution. During specific implementation, a hardware architecture of the processor 201 may be an application-specific integrated circuit (ASIC) architecture, an MIPS architecture, an ARM architecture, an NP architecture, or the like.

In some embodiments, the processor 201 may be configured to parse a signal received by the Bluetooth communication module 203, for example, a pairing mode modification request sent by the first electronic device 101. The processor 201 may be configured to perform a corresponding processing operation based on a parsing result, for example, generate a pairing mode modification response.

The memory 202 is coupled to the processor 201 and configured to store various software programs and/or a plurality of groups of instructions. During specific implementation, the memory 202 may include a high-speed random access memory, and may also include a nonvolatile memory, for example, one or more diskette storage devices, a flash device, or another nonvolatile solid-state storage device. The memory 202 may store an operating system, for example, an embedded operating system, for example, uCOS, VxWorks, or RTLinux. The memory 202 may further store a communication program. The communication program may be used to communicate with the first electronic device 101, one or more servers, or another device.

The Bluetooth communication module 203 may include a Bluetooth low energy (BLE) module, and may further include a classic Bluetooth (BR/EDR) module.

In some embodiments, the Bluetooth communication module 203 may monitor a signal transmitted by another device (for example, the first electronic device 101), for example, a probe request or a scanning signal, and may send a response signal, a scanning response, or the like, so that the another device (for example, the first electronic device 101) can discover the electronic device 200, and the electronic device 200 establishes a wireless communication connection to the another device (for example, the first electronic device 101), and communicates with the another device (for example, the first electronic device 101) through Bluetooth.

In some embodiments, the Bluetooth communication module 203 may alternatively transmit a signal, for example, broadcasts a BLE signal, so that the another device (for example, the first electronic device 101) can discover the electronic device 200, and the electronic device 200 establishes a wireless communication connection to the another device (for example, the first electronic device 101), and communicates with the another device (for example, the first electronic device 101) through Bluetooth.

A wireless communication function of the electronic device 200 may be implemented through the antenna 204, the Bluetooth communication module 203, the modem processor, and the like.

The antenna 204 may be configured to transmit and receive electromagnetic wave signals. Each antenna in the electronic device 200 may be configured to cover one or more communication frequency bands.

In some embodiments, the Bluetooth communication module 203 may have one or more antennas.

The power switch 205 may be configured to control a power supply to supply power to the electronic device 200.

The USB communication processing module 206 may be configured to communicate with another device through a USB port (not shown).

The audio module 207 may be configured to output an audio signal through an audio output interface, so that the electronic device 200 can support audio playing. The audio module 207 may be further configured to receive audio data through an audio input interface. The electronic device 200 may be a media playing device like a Bluetooth headset.

In some embodiments, the electronic device 200 may further include a display (not shown). The display may be configured to display an image, prompt information, and the like. The display may be a liquid crystal display (liquid crystal display, LCD), an organic light-emitting diode (organic light-emitting diode, OLED) display, an active-matrix organic light emitting diode (active-matrix organic light emitting diode, AMOLED) display, a flexible light-emitting diode (flexible light-emitting diode, FLED) display, a quantum dot light emitting diode (quantum dot light emitting diode, QLED) display, or the like.

In some embodiments, the electronic device 200 may further include a serial interface like an RS-232 interface. The serial interface may be connected to another device, for example, an audio speaker device like a speaker, so that the electronic device 200 collaborates with the audio speaker device to play audio and a video.

It may be understood that the structure shown in FIG. 5A does not constitute a specific limitation on the electronic device 200. In some other embodiments of this application, the electronic device 200 may include more or fewer components than those shown in the figure, or some components may be combined, or some components may be split, or different component arrangements may be used. The components shown in the figure may be implemented by hardware, software, or a combination of software and hardware.

It may be understood that the structure shown in FIG. 5A does not constitute a specific limitation on the electronic device 200. In some other embodiments of this application, the electronic device 200 may include more or fewer components than those shown in the figure, or some components may be combined, or some components may be split, or different component arrangements may be used. The components shown in the figure may be implemented by hardware, software, or a combination of software and hardware.

In some embodiments, the electronic device 200 may include hardware included in the structure shown in FIG. 5A. Components shown in the figure may be implemented by hardware, software, or a combination of hardware and software, including one or more signal processing and/or application-specific integrated circuits.

A software system of the electronic device 200 may use a layered architecture, an event-driven architecture, a microkernel architecture, a micro service architecture, a cloud architecture, or the like. For example, a software system of the electronic device 200 may include but is not limited to iOS^{®}, Android^{®}, Harmony^{®}, Windows^{®}, Linux, or another operating system. Harmony^{®} is the Huawei HarmonyOS.

In some embodiments, the electronic device 200 is an Android system. The Android system is divided into four layers: an application layer, an application framework layer, an Android runtime and system library, and a kernel layer from top to bottom. The application layer may include a projection management application used for device connection and projection display. The application framework layer may include an event manager, a window manager, a display manager, and the like. The system library may include a media library, event data, and the like. The kernel layer is used for device discovery, device authentication, device connection, and the like. For specific content of each part, refer to the related descriptions in FIG. 5A. Details are not described herein again.

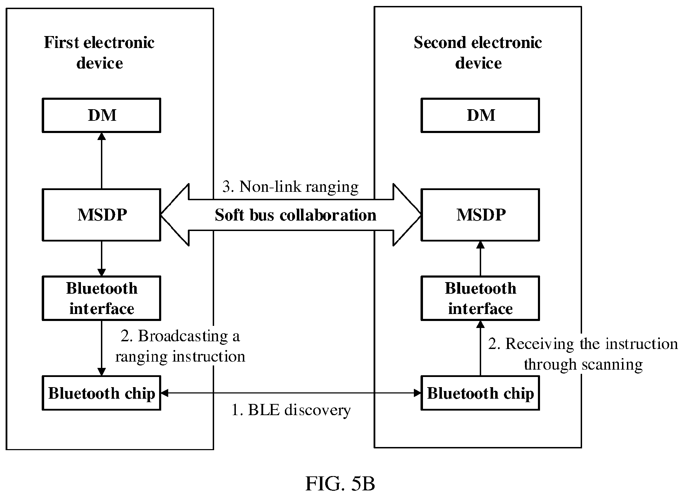

Based on the diagrams of the hardware and software structures of the electronic device 100 shown in FIG. 3 and FIG. 4, and the diagram of the hardware structure of the electronic device 200 shown in FIG. 5A, the following describes, by using FIG. 5B, a Bluetooth ranging method provided in an embodiment of this application.

FIG. 5B shows an example of a system architecture of a first electronic device and a second electronic device. Both the first electronic device and the second electronic device run the HarmonyOS. As shown in FIG. 5B, first, a first step (BLE discovery) is performed, that is, the first electronic device and the second electronic device discover each other through BLE by using respective Bluetooth chips of the first electronic device and the second electronic device. Then, a second step (broadcasting a ranging instruction) is performed, that is, the first electronic device broadcasts the ranging instruction by using a Bluetooth interface and the Bluetooth chip of the first electronic device, and the second electronic device receives the instruction through reception scanning by using a Bluetooth interface and a Bluetooth chip of the second electronic device. Finally, a third step (non-link ranging) is performed, that is, the second electronic device obtains an RSSI parameter corresponding to the instruction, the second electronic device further sends the RSSI parameter to the first electronic device in a soft bus collaboration manner according to the multicast source discovery protocol (Multicast Source Discovery Protocol, MSDP), and the first electronic device performs ranging based on the RSSI parameter. For a specific ranging process, refer to the following related content of performing ranging by the second electronic device based on the RSSI parameter.

Based on the diagram of the Bluetooth ranging system 10 shown in FIG. 1, the diagrams of the hardware and software structures of the electronic device 100 shown in FIG. 3 and FIG. 4, and the diagram of the hardware structure of the electronic device 200 shown in FIG. 5A, the following describes a Bluetooth ranging method provided in an embodiment of this application.

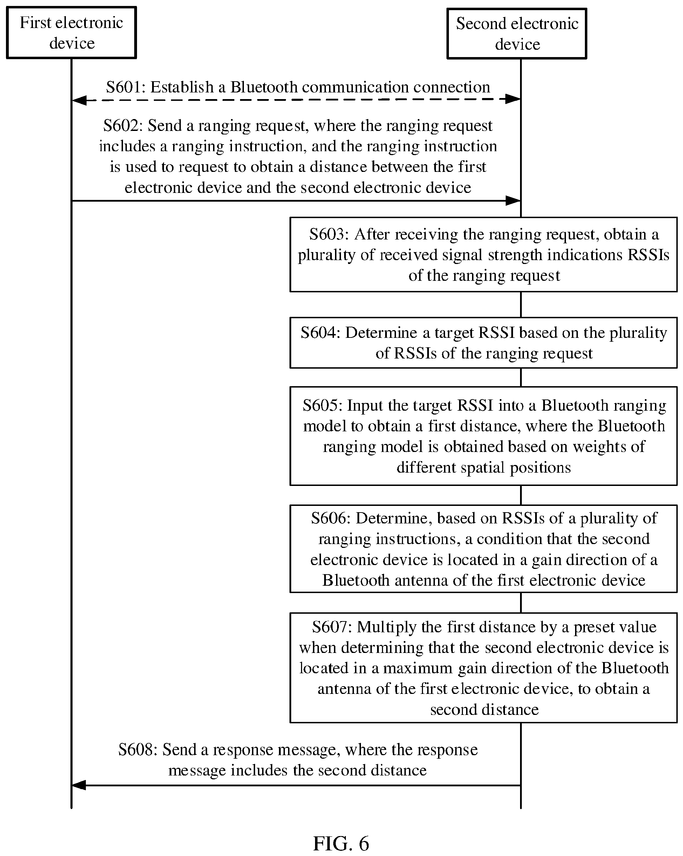

Using two devices as an example, FIG. 6 is a flowchart of another Bluetooth ranging method according to an embodiment of this application. The Bluetooth ranging method may include some or all of the following steps.

It should be noted that in this embodiment of this application, a user operation may be a touch operation (for example, a tap operation, a touch and hold operation, a slide-up operation, a slide-down operation, or a side-slide operation) of a user, or may be a non-contact operation (for example, a mid-air gesture), or may be a voice instruction of the user. This is not specifically limited in this embodiment of this application.

Step S601: A first electronic device establishes a Bluetooth communication connection to a second electronic device.

In some embodiments, when detecting a user operation of enabling on Bluetooth, the first electronic device sends a connection request to the second electronic device in response to the user operation, and monitors a broadcast signal of the second electronic device. When the broadcast signal from the second electronic device is detected, the first electronic device establishes, in response, a BLE connection between the first electronic device and the second electronic device.

For example, the user may enable Bluetooth functions of a mobile phone and a computer, and establish a Bluetooth connection. The user may enable Bluetooth of the mobile phone. Further, the mobile phone detects a user operation performed by the user on Bluetooth, and the mobile phone may display a list of found devices that have enabled Bluetooth. For example, the list of devices includes an identifier of a computer. Further, if detecting that the user selects the identifier of the computer in the list of devices, the mobile phone may establish a Bluetooth connection to the computer.

In a multi-device collaboration scenario, after a smart television, a computer, and a mobile phone establish a communication connection, the smart television, the computer, and the mobile phone A form a device group. Members in the device group may be dynamically increased or decreased. For example, the first electronic device is a mobile phone, and the second electronic device may be a computer and a smart television, that is, the mobile phone separately establishes Bluetooth communication connections to the computer and the smart television. In this case, according to this embodiment of this application, the mobile phone may separately obtain a distance from the computer and a distance from the smart television.

Step S602: The first electronic device sends a ranging request to the second electronic device, where the ranging request includes a ranging instruction, and the ranging instruction is used to request to obtain a distance between the first electronic device and the second electronic device.

In an implementation, after establishing the Bluetooth communication connection to the second electronic device, the first electronic device broadcasts the ranging request through BLE.

In another implementation, the first electronic device may display a ranging control, and further send the ranging request to the second electronic device in response to a user operation performed by the user on the ranging control. For example, in a collaboration process between the first electronic device and the second electronic device, the first electronic device may display a prompt message and a related control. The prompt message prompts the user whether ranging needs to be performed. For example, the prompt message is "Do you want to detect the distance from the second electronic device", and the related control may include an OK control and a reject control. Further, when detecting a user operation performed by the user on the OK control, the first electronic device performs step S602; or when detecting a user operation performed by the user on the reject control, the first electronic device does not perform step S602.

In some other embodiments, the first electronic device and the second electronic device are in a multi-device collaboration scenario. For example, in addition to establishing the Bluetooth communication connection to the second electronic device, the first electronic device further establishes Bluetooth communication connections to a plurality of other devices. In this case, after the first electronic device broadcasts the parameter request and the plurality of other devices receives the ranging request, the plurality of other devices may also measure RSSIs of the ranging request, and send measured RSSIs to the first electronic device, so that the first electronic device can obtain information about a distance between the first electronic device and each device.

Step S603: After receiving the ranging request, the second electronic device obtains a plurality of received signal strength indications RSSIs of the ranging request.

In some embodiments, after receiving the ranging request, the second electronic device measures, in response to the ranging request, the plurality of received RSSIs of the ranging request. A method for measuring the RSSI is not limited herein.

Step S604: The second electronic device determines a target RSSI based on the plurality of RSSIs of the ranging request.

In some embodiments, the second electronic device may perform filtering on RSSIs of a plurality of ranging instructions, to obtain the target RSSI. Filtering may include removing some RSSIs from the RSSIs of the plurality of ranging instructions based on a preset rule, averaging the RSSIs, and the like.

It should be noted that there is a specific rule for propagation of a radio signal in an actual environment. To be specific, as a distance between a receiving node and a Bluetooth node increases, strength of a signal received by the receiving node attenuates in the form of a logarithmic function. In actual ranging, the measured RSSI value fluctuates greatly due to factors such as multipath and non-line-of-sight. As a result, the measured RSSI value deviates from an actual value. Therefore, before data is substituted into a formula for calculation, filtering may be performed on the data, to improve accuracy of RSSI ranging.

In this embodiment of this application, for a fluctuation phenomenon of the measured RSSI value, the second electronic device may process the measured RSSI value by using a data processing method, like mean filtering, Gaussian filtering, or a combination of median filtering and Gaussian filtering, to obtain a stable and smooth target RSSI. A filtering method for determining the target RSSI is not limited in this embodiment of this application.

Step S605: The second electronic device inputs the target RSSI into a Bluetooth ranging model to obtain a first distance, where the Bluetooth ranging model is obtained based on weights of different spatial positions.

The weights of the different spatial positions include weights of at least two spatial positions.

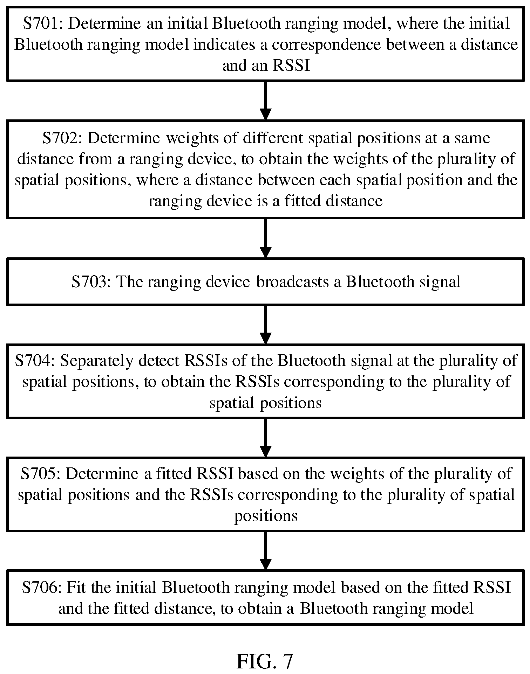

FIG. 7 is a flowchart of a method for determining a Bluetooth ranging model according to an embodiment of this application. The following uses the ranging device as an example for description. The ranging device may be the first electronic device or the second electronic device.

S701: Determine an initial Bluetooth ranging model, where the initial Bluetooth ranging model indicates a correspondence between a distance and an RSSI.

In some embodiments, because a carrier frequency of BLE usually ranges from 2400 MHz to 2483.5 MHz, the carrier frequency of 2450 MHz may be used to determine the initial Bluetooth ranging model. Specifically, the following initial Bluetooth ranging model may be obtained at a carrier frequency of 2450 MHz based on a Fris transmission equation and a free path loss analysis theory: $d = {10}^{\left(\frac{Advpower - Lin - RSSI - 100.22}{20}\right)} ∗ 1000$ Formula (1) d is a distance between two devices, Advpower is transmit power, Lin is an indoor path loss (which is a constant), and RSSI is a strength indication of a Bluetooth signal when the distance between the devices is d.

It should be noted that in another scenario, the Bluetooth ranging model may alternatively be another formula. This is not limited herein.

S702: Determine weights of different spatial positions at a same distance from the ranging device, to obtain the weights of the plurality of spatial positions, where a distance between each spatial position and the ranging device is a fitted distance.

The distance between each spatial position and the ranging device is the same, and a value of the fitted distance is not limited herein.

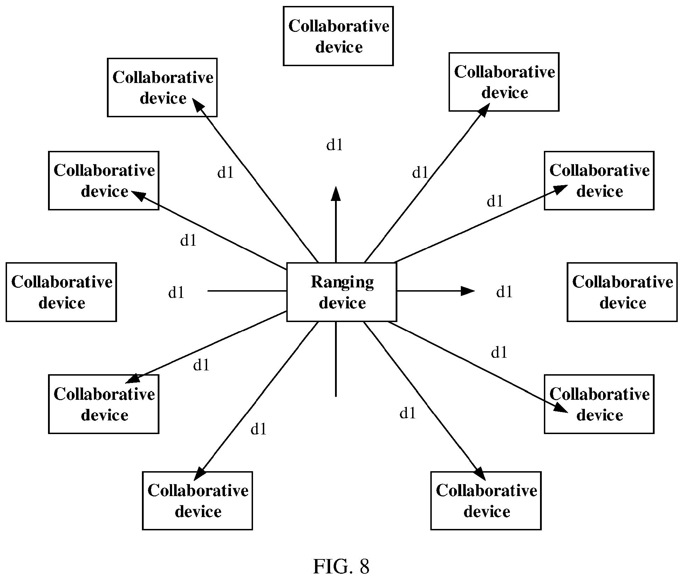

FIG. 8 is a diagram of different spatial positions according to an embodiment of this application. FIG. 8 shows an example of 11 spatial positions on a horizontal plane. The horizontal plane may be a plane horizontal to the ground. For example, a ranging device is placed on a table, one vacant position is determined on the desktop at an interval of 30° by using a geometric center of the ranging device as a center and using d1 as a radius, to obtain the 11 spatial positions shown in FIG. 8. It can be learned that the distance between each spatial position and the ranging device is equal, and is all d1.

In some embodiments, the weights of the spatial positions may be determined based on a habit of a user, for example, usage data of the user.

In an implementation, user data generated when the user uses the ranging device and a collaborative device may be collected, and then spatial weights of relative positions between the ranging device and the collaborative device are obtained through division based on the user data. For example, the weight of the spatial position may be determined based on a preferred position of the collaborative device when the user uses the ranging device. It is assumed that when the user uses the ranging device to collaborate with the collaborative device, the collaborative device is usually located on the left or the right of the ranging device. In this case, weights of spatial positions on the left or the right of the ranging device may be increased, and a weight of another spatial position may be decreased. It may be understood that, in this application, a spatial weight division manner is used to analyze collaborative orientations of the devices commonly used by the user, and divide and correct weights of different spatial states of the devices. This can improve accuracy of distances measured by the collaborative devices in commonly used orientations of the user, providing better experience in the commonly used orientations.

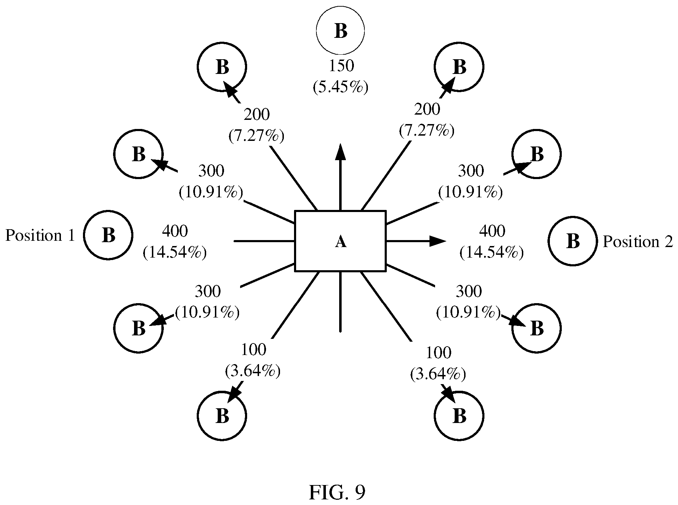

FIG. 9 is a diagram of a weight of a spatial position according to an embodiment of this application. A represents a ranging device, and B represents a collaborative device. Distances from a position of each B to A are equal, and each B and A are located on a same horizontal plane. As shown in FIG. 9, assuming that it is determined, based on a use habit of a user, that probabilities that the collaborative devices are located at a position 1 and a position 2 are 14.54%, it may be determined that weights of the position 1 and the position 2 are 14.54%. A method for determining a weight of another position in which B is located is the same as that for determining a weight of the position 1, and details are not described again. It should be noted that 100, 150, 200, 300, and 400 shown in FIG. 9 are merely used to reflect a proportional relationship between different spatial weights.

A spatial position is a relative position between two devices. For example, the spatial position of the response device relative to the request device is the first spatial position, that is, the response device is located on the left of the request device.

In this embodiment of this application, because weights of spatial positions are different during fitting of the Bluetooth ranging model, the Bluetooth ranging model has different distance accuracy for different spatial positions. Therefore, a ranging capability is higher at a spatial position with a higher weight.

S703: The ranging device broadcasts a Bluetooth signal.

In some embodiments, the ranging device may broadcast a preset Bluetooth signal through the BLE in response to a user operation.

S704: Separately detect RSSIs of the Bluetooth signal at the plurality of spatial positions, to obtain the RSSIs corresponding to the plurality of spatial positions.

In some embodiments, a same collaborative device may be placed at each of the plurality of spatial positions, and each RSSI of the Bluetooth signal is detected, to obtain an RSSI corresponding to each spatial position. The RSSI corresponding to each spatial position may be obtained through filtering. A filtering method is not limited herein.

S705: Determine a fitted RSSI based on the weights of the plurality of spatial positions and the RSSIs corresponding to the plurality of spatial positions.

In some embodiments, the RSSI corresponding to each spatial position may be multiplied by a weight corresponding to each spatial position, to obtain a plurality of processed RSSIs. Then, the plurality of processed RSSIs are averaged, to obtain the fitted RSSI.

The weights of the plurality of spatial positions may be in a percentage format. For example, the plurality of spatial positions are a first position, a second position, a third position, and a fourth position. A weight of the first position is 25%, a weight of the second position is 25%, a weight of the third position is 10%, and a weight of the fourth position is 40%. If an RSSI measured at the first position is a, an RSSI measured at the second position is b, an RSSI measured at the third position is c, and an RSSI measured at the fourth position is d, a fitted RSSI=25%a+25%b+10%b+40%d. It should be noted that the weights of the plurality of spatial positions may alternatively be in a data or proportion format. This is not limited herein.

In this embodiment of this application, a distance between devices is determined by using the Bluetooth ranging model, where the Bluetooth ranging model is obtained based on weights of different spatial positions. Therefore, this can improve ranging accuracy of a specific spatial position, and improve user experience. This embodiment of this application is applicable to a mobile terminal device, and can improve ranging accuracy in a collaboration process of mobile devices.

In addition, because Bluetooth low energy is widely present in various terminal devices, in most scenarios, if inter-device collaboration is required, a communication function of the Bluetooth low energy needs to be used. In this embodiment of this application, an approximate distance between devices may be calculated by analyzing some inherent parameters of a Bluetooth module without adding another ranging device. This can reduce additional power consumption in ranging.

S706: Fit the initial Bluetooth ranging model based on the fitted RSSI and the fitted distance, to obtain the Bluetooth ranging model.

In an implementation, the fitted RSSI and the fitted distance may be input into Formula (1), Advpower is used as an unknown quantity, and Advpower is calculated. Advpower obtained through calculation is substituted into Formula (1), to obtain the Bluetooth ranging model.

Step S606: The second electronic device determines, based on the RSSIs of the plurality of ranging instructions, a condition that the second electronic device is located in a gain direction of a Bluetooth antenna of the first electronic device.

In some embodiments, the second electronic device calculates a change rate of the RSSIs based on the RSSIs of the plurality of ranging instructions, and determines, based on change rate of the RSSIs, the condition that the second electronic device is in the gain direction of the Bluetooth antenna of the first electronic device.

In an implementation, the second electronic device may obtain a difference between RSSIs of every two of the plurality of ranging instructions, and then the difference between the RSSIs of the every two ranging instructions is divided by a time difference between the two ranging instructions, to obtain N values; and the N values are separately divided by N, to obtain a change rate, where N is a positive integer.

The following uses three ranging instructions as an example for description. For example, the three ranging instructions are a first instruction, a second instruction, and a third instruction. An RSSI of the first instruction is a, an RSSI of the second instruction is b, an RSSI of the third instruction is c, time of receiving the first instruction is *tₐ*, time of receiving the second instruction is *t_{b}*, and time of receiving the third instruction is *t_{c}.* In this case, a change rate *m* may be calculated by using Formula (2): $m = \frac{1}{2} \left(\frac{\left|b-a\right|}{{t}_{b} - {t}_{a}}+\frac{\left|c-b\right|}{{t}_{c} - {t}_{b}}\right)$ Formula (2)

It should be noted that the change rate may alternatively be calculated in another manner herein. The manner of calculating the change rate is not limited herein.

Step S607: The second electronic device multiplies the first distance by a preset value when determining that the second electronic device is located in a maximum gain direction of the Bluetooth antenna of the first electronic device, to obtain a second distance.

In some embodiments, the second electronic device multiplies the first distance by a preset value when determining that the change rate is greater than a preset threshold (in the maximum gain direction), to obtain the second distance.

The preset threshold and the preset value may be determined based on an actual situation. For example, the preset value may be 1.2 or 1.4. This is not limited herein. Considering that an RSSI is stronger when the response device is located in the maximum gain direction of the Bluetooth antenna of the request device and accordingly an obtained distance is smaller, in this embodiment of this application, an obtained distance is multiplied by a correction coefficient greater than 1, to obtain a more accurate distance.

In some other embodiments, the second electronic device multiplies the first distance by a preset correction coefficient when determining that the change rate is not greater than a preset threshold (not in the maximum gain direction), to obtain the second distance. The correction coefficient may be a value less than 1.

Step S608: The second electronic device sends a response message to the first electronic device, where the response message includes the second distance.

In an implementation, after obtaining the second distance, the second electronic device may send the response message to the first electronic device, where the response message includes the second distance.

In another implementation, when performing step S606, if the second electronic device determines that the second electronic device is not located in the maximum gain direction of the Bluetooth antenna of the first electronic device, the second electronic device may send a response message to the first electronic device, where the response message includes the first distance.

In some embodiments, after obtaining the second distance, the second electronic device may determine a collaboration state of the first electronic device based on the second distance. For example, when the second distance is greater than a preset distance, it is considered that the collaboration state of the first electronic device is poor. Further, the second electronic device may prompt the user in the form of a display, voice broadcast, or the like.

In some other embodiments, after obtaining the second distance, the first electronic device may determine a collaboration state of the second electronic device based on the second distance. For example, when the second distance is greater than a preset distance, it is considered that the collaboration state of the second electronic device is poor. Further, the first electronic device may prompt the user in the form of a display, voice broadcast, or the like. For example, in a Bluetooth application of the first electronic device, a connected device may be displayed, and distance information of the device may be further displayed.

In this embodiment of this application, the first electronic device may alternatively perform a ranging operation.

For example, the first electronic device sends a request message to the second electronic device, where the request message is used to request an RSSI that is of a Bluetooth signal of the first electronic device and that is received by the second electronic device. Further, after obtaining the RSSI, the second electronic device may send the RSSI to the first electronic device, and the first electronic device performs step S604 to step S607 to determine the first distance or the second distance.

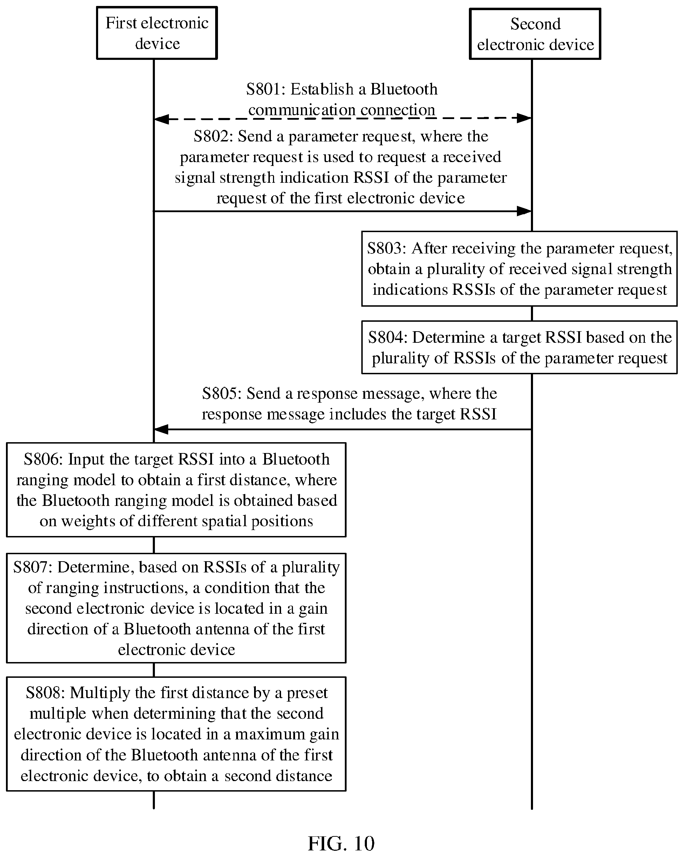

FIG. 10 is a diagram of another Bluetooth ranging method according to an embodiment of this application.

Step S801: A first electronic device establishes a Bluetooth communication connection to a second electronic device.

For a specific implementation of step S803, refer to content of step S601. Details are not described herein again.

S802: The first electronic device sends a parameter request to the second electronic device, where the parameter request is used to request a received signal strength indication RSSI of the parameter request of the first electronic device.

In an implementation, the first electronic device broadcasts a parameter request, where the parameter request is used to request an RSSI of a Bluetooth signal broadcast by the first electronic device.

In some other embodiments, the first electronic device and the second electronic device are in a multi-device collaboration scenario. For example, in addition to establishing the Bluetooth communication connection to the second electronic device, the first electronic device further establishes Bluetooth communication connections to a plurality of other devices. In this case, after the first electronic device broadcasts the parameter request and the plurality of other devices receives the parameter request, the plurality of other devices may also measure RSSIs of the parameter request, and send measured RSSIs to the first electronic device, so that the first electronic device can obtain information about a distance between the first electronic device and each device. For example, the plurality of other devices may also perform the following step S803 to step S805.

S803: After receiving the parameter request, the second electronic device obtains a plurality of received signal strength indications RSSIs of the parameter request.

For a specific implementation of step S803, refer to content of step S603. Details are not described herein again.

S804: The second electronic device determines a target RSSI based on the plurality of RSSIs of the parameter request.

For a specific implementation of step S804, refer to content of step S604. Details are not described herein again.

S805: The second electronic device sends a response message to the first electronic device, where the response message includes the target RSSI.

S806: The first electronic device inputs the target RSSI into a Bluetooth ranging model to obtain a first distance, where the Bluetooth ranging model is obtained based on weights of different spatial positions.

For a specific implementation of step S808, refer to content of step S605. Details are not described herein again.

Step S807: The first electronic device determines, based on RSSIs of a plurality of ranging instructions, a condition that the second electronic device is located in a gain direction of a Bluetooth antenna of the first electronic device.

For a specific implementation of step S807, refer to content of step S606. Details are not described herein again.

In some embodiments, the first electronic device may perform step S808 when determining that the second electronic device is located in a maximum gain direction of the Bluetooth antenna of the first electronic device.

In some other embodiments, when determining that the second electronic device is not in the maximum gain direction of the Bluetooth antenna of the first electronic device, the first electronic device may not process the first distance, and directly use the first distance as a distance between the first electronic device and the second electronic device. Alternatively, the first electronic device may multiply the first distance by a correction coefficient, to obtain a second distance. The correction coefficient may be a value less than 1.

Step S808: The first electronic device multiplies the first distance by a preset value when determining that the second electronic device is located in the maximum gain direction of the Bluetooth antenna of the first electronic device, to obtain a second distance.

For a specific implementation of step S808, refer to content of step S607. Details are not described herein again.

In some embodiments, after obtaining the second distance, the first electronic device may send the second distance to the second electronic device.

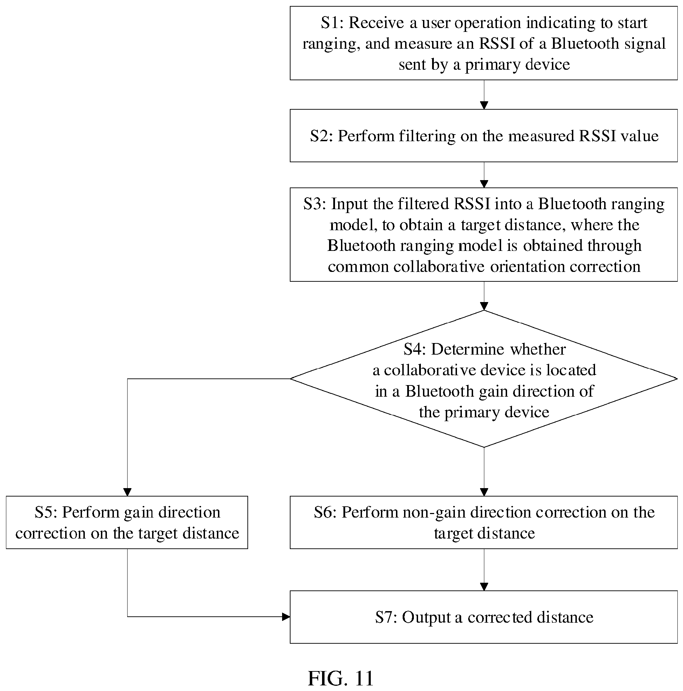

FIG. 11 is a diagram of yet another Bluetooth ranging method according to an embodiment of this application. The method may be performed by the electronic device 100 or the electronic device 200, or may be performed by any device in FIG. 1 or FIG. 2.

S1: Receive a user operation indicating to start ranging, and measure an RSSI of a Bluetooth signal sent by a primary device.

In some embodiments, a collaborative device receives a user operation indicating to start ranging, and measures the RSSI of the Bluetooth signal sent by the primary device. The collaborative device may be the second electronic device in FIG. 6, and the primary device may be the first electronic device in FIG. 6. For detailed content of step S1, refer to the foregoing related descriptions in FIG. 6. Details are not described herein again.

S2: Perform filtering on a measured RSSI value.

A filtering method is not limited herein. For details, refer to the related descriptions of step S604.

S3: Input the filtered RSSI into a Bluetooth ranging model, to obtain a target distance, where the Bluetooth ranging model is obtained through common collaborative orientation correction.

For a correction process of the Bluetooth ranging model, refer to the related descriptions in FIG. 7.

S4: Determine whether the collaborative device is located in a Bluetooth gain direction of the primary device; and when the collaborative device is located in the Bluetooth gain direction of the primary device, perform step S5; or when the collaborative device is not located in the Bluetooth gain direction of the primary device, perform step S6.

In some embodiments, the collaborative device is located in the Bluetooth gain direction of the primary device, that is, the collaborative device is located in a maximum gain direction of a Bluetooth antenna of the primary device. Herein, for a process of determining whether the collaborative device is located in the Bluetooth gain direction of the primary device, refer to the related descriptions of step S606.

S5: Perform gain direction correction on the target distance.

In an implementation, the target distance may be multiplied by a preset value, where the preset value may be a value greater than 1.

For a method for performing gain direction correction on the target distance herein, refer to the related descriptions of step S607.

S6: Perform non-gain direction correction on the target distance.

In an implementation, non-gain direction correction may not be performed on the target distance, and the target distance is used as a corrected distance. Further, S7 is performed to output the corrected distance.

In another implementation, non-gain direction correction may be performed on the target distance, for example, the target distance is multiplied by a correction coefficient, where the correction coefficient is less than 1, to obtain a corrected distance.

S7: Output the corrected distance.

After step S5 or step S6 is performed, the corrected distance may be obtained.

An embodiment of this application further provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in the foregoing embodiments.

An embodiment of this application further provides a computer program product including instructions. When the computer program product is run on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It can be understood that the various implementations of this application may be arbitrarily combined to achieve different technical effects.

All or some of the foregoing embodiments may be implemented by using software, hardware, firmware, or any combination thereof. When software is used to implement the embodiments, all or a part of the embodiments may be implemented in the form of a computer program product. The computer program product includes one or more computer instructions. When the computer program instructions are loaded and executed on the computer, all or some of the procedures or functions in this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

Persons of ordinary skill in the art may understand that all or some of the procedures of the methods in embodiments may be implemented by a computer program instructing related hardware. The program may be stored in the computer-readable storage medium. When the program is executed, the procedures in the method embodiments may be included. The foregoing storage medium includes any medium that can store program code, such as a ROM, a random access memory RAM, a magnetic disk, or an optical disc.

In summary, what is described above is merely embodiments of the technical solutions of this application, but is not intended to limit the protection scope of this application.

## Claims

1. A Bluetooth ranging method, comprising:
establishing (S601), by a response device, a Bluetooth communication connection to a request device;
measuring (S602), by the response device, signal strength of a ranging request after receiving the ranging request sent by the request device, to obtain a first received signal strength indication, RSSI;
obtaining (S605), by the response device, a first distance based on the first RSSI and a Bluetooth ranging model, wherein the Bluetooth ranging model is obtained through fitting based on a correspondence between a preset distance from the request device and a modified RSSI at the preset distance; and the modified RSSI is obtained by processing a plurality of RSSIs measured at a plurality of different spatial positions at a same distance from the request device when the request device broadcasts a Bluetooth signal, and weights corresponding to each of the plurality of spatial positions; and
sending (S608), by the response device, the first distance to the request device.

2. The method according to claim 1, wherein the modified RSSI is obtained by adding products obtained after the plurality of RSSIs are respectively multiplied by the weights corresponding to the plurality of spatial positions.

3. The method according to claim 1 or 2, wherein when the response device is at different positions and is at a same distance from the request device, values of the first distance are different.

4. The method according to any one of claims 1 to 3, wherein when a spatial position of the response device relative to the request device is a first spatial position, the first distance is d1, and a weight of the first spatial position is a first weight; and when a spatial position of the response device relative to the request device is a second spatial position, the first distance is d2, and a weight of the second spatial position is a second weight, wherein the first weight is higher than the second weight; and
when distances from the first spatial position and the second spatial position to the request device are both d, a difference between d1 and d is less than a difference between d2 and d, wherein d1, d2, and d are all positive numbers.

5. The method according to any one of claims 1 to 4, wherein a weight of the spatial position is obtained, when a user uses the request device to perform Bluetooth communication with another device, based on position data of the another device.

6. The method according to any one of claims 1 to 5, wherein the obtaining (S605), by the response device, a first distance based on the first RSSI and a Bluetooth ranging model comprises:
inputting (S605), by the response device, the first RSSI into the Bluetooth ranging model, to obtain a second distance; and
processing (S606), by the response device, the second distance when determining that the response device is located in a preset gain direction of a Bluetooth antenna of the request device, to obtain the first distance.

7. The method according to claim 6, wherein the processing (S606), by the response device, the second distance when determining that the response device is located in a preset gain direction of a Bluetooth antenna of the request device comprises:
multiplying (S606), by the response device, the second distance by a preset value when determining that the response device is located in a maximum gain direction of the Bluetooth antenna of the request device, to obtain the first distance.

8. The method according to claim 7, wherein the first RSSI comprises at least two RSSI parameters, and the method further comprises:
calculating (S606), by the response device, a change rate of the at least two RSSI parameters; and
when the change rate of the at least two RSSI parameters exceeds a preset threshold, determining (S606), by the response device, that the response device is located in the maximum gain direction of the Bluetooth antenna of the request device.

9. The method according to any one of claims 1 to 8, wherein the measuring (S602), by the response device, signal strength of a ranging request after receiving the ranging request sent by the request device, to obtain a first received signal strength indication RSSI comprises:
measuring (S602), by the response device, the signal strength of the ranging request after receiving the ranging request sent by the request device, to obtain a second RSSI; and
performing (S603), by the response device, filtering on the second RSSI, to obtain the first RSSI.

10. A Bluetooth ranging method, comprising:
establishing (S801), by a request device, a Bluetooth communication connection to a response device;
sending (S802), by the request device, a parameter request to the response device, wherein the parameter request is used to request to measure signal strength of the parameter request to obtain a first received signal strength indication, RSSI;
receiving (S805), by the request device, the first RSSI sent by the response device; and
obtaining (S806), by the request device, a first distance based on the first RSSI and a Bluetooth ranging model, wherein the Bluetooth ranging model is obtained through fitting based on a correspondence between a preset distance from the request device and a modified RSSI at the preset distance; and the modified RSSI is obtained by processing a plurality of RSSIs measured at a plurality of different spatial positions at a same distance from the request device when the request device broadcasts a Bluetooth signal, and weights corresponding to each of the plurality of spatial positions.

11. The method according to claim 10, wherein the modified RSSI is obtained by adding products obtained after the plurality of RSSIs are respectively multiplied by the weights corresponding to the plurality of spatial positions.

12. The method according to claim 10 or 11, wherein when the response device is at different positions and is at a same distance from the request device, values of the first distance are different.

13. The method according to any one of claims 10 to 12, wherein a weight of the spatial position is obtained, when a user uses the request device to perform Bluetooth communication with another device, based on position data of the another device.

14. An electronic device (100-102, 200), wherein the electronic device (100-102, 200) comprises one or more processors and one or more memories, the one or more memories are coupled to the one or more processors, the one or more memories are configured to store computer program code, the computer program code comprises computer instructions, and when the one or more processors execute the computer instructions, the electronic device (100-102, 200) is enabled to perform the method according to any one of claims 1 to 9, or 10 to 13.

15. A computer-readable storage medium, comprising instructions, wherein when the instructions are run on an electronic device (100-102, 200), the electronic device (100-102, 200) is enabled to perform the method according to any one of claims 1 to 9, or 10 to 13.

## Patentansprüche

1. Bluetooth-Entfernungsmessverfahren, das Folgendes umfasst:
Herstellen (S601), durch eine Antworteinrichtung, einer Bluetooth-Kommunikationsverbindung zu einer Anforderungseinrichtung;
Messen (S602), durch die Antworteinrichtung, einer Signalstärke einer Entfernungsmessanforderung nach dem Empfangen der Entfernungsmessanforderung, die durch die Anforderungseinrichtung gesendet wird, um einen ersten Empfangssignalstärke-Indikator, RSSI, zu erhalten;
Erhalten (S605), durch die Antworteinrichtung, einer ersten Entfernung auf der Basis des ersten RSSI und eines Bluetooth-Entfernungsmessmodells, wobei das Bluetooth-Entfernungsmessmodell durch Anpassen auf der Basis einer Korrespondenz zwischen einer vorgegebenen Entfernung von der Anforderungseinrichtung und einem modifizierten RSSI bei der vorgegebenen Entfernung erhalten wird; und der modifizierte RSSI durch Verarbeiten mehrerer RSSIs, die an mehreren unterschiedlichen räumlichen Positionen in einer selben Entfernung von der Anforderungseinrichtung gemessen werden, wenn die Anforderungseinrichtung ein Bluetooth-Signal aussendet, und von Gewichten, die mit jeder der mehreren räumlichen Positionen korrespondieren, erhalten wird; und
Senden (S608), durch die Antworteinrichtung, der ersten Entfernung an die Anforderungseinrichtung.

2. Verfahren nach Anspruch 1, wobei der modifizierte RSSI durch Addieren von Produkten erhalten wird, die erhalten werden, nachdem die mehreren RSSIs jeweils mit den Gewichten, die mit den mehreren räumlichen Positionen korrespondieren, multipliziert worden sind.

3. Verfahren nach Anspruch 1 oder 2, wobei, wenn die Antworteinrichtung sich an unterschiedlichen Positionen und in einer selben Entfernung von der Anforderungseinrichtung befindet, Werte der ersten Entfernung unterschiedlich sind.

4. Verfahren nach einem der Ansprüche 1 bis 3, wobei, wenn eine räumliche Position der Antworteinrichtung relativ zu der Anforderungseinrichtung eine erste räumliche Position ist, die erste Entfernung d1 ist und ein Gewicht der ersten räumlichen Position ein erstes Gewicht ist; und, wenn eine räumliche Position der Antworteinrichtung relativ zu der Anforderungseinrichtung eine zweite räumliche Position ist, die erste Entfernung d2 ist und ein Gewicht der zweiten räumlichen Position ein zweites Gewicht ist, wobei das erste Gewicht höher als das zweite Gewicht ist; und,
wenn Entfernungen von sowohl der ersten räumlichen Position als auch der zweiten räumlichen Position zu der Anforderungseinrichtung d sind, eine Differenz zwischen d1 und d kleiner als eine Differenz zwischen d2 und d ist, wobei d1, d2 und d jeweils positive Zahlen sind.

5. Verfahren nach einem der Ansprüche 1 bis 4, wobei ein Gewicht der räumlichen Position auf der Basis von Positionsdaten der anderen Einrichtung erhalten wird, wenn ein Benutzer die Anforderungseinrichtung nutzt, um eine Bluetooth-Kommunikation mit einer anderen Einrichtung durchzuführen.

6. Verfahren nach einem der Ansprüche 1 bis 5, wobei das Erhalten (S605), durch die Antworteinrichtung, einer ersten Entfernung auf der Basis des ersten RSSI und eines Bluetooth-Entfernungsmessmodells Folgendes umfasst:
Eingeben (S605), durch die Antworteinrichtung, des ersten RSSI in das Bluetooth-Entfernungsmessmodell, um eine zweite Entfernung zu erhalten; und
Verarbeiten (S606), durch die Antworteinrichtung, der zweiten Entfernung, wenn bestimmt wird, dass die Antworteinrichtung sich in einer vorgegebenen Gewinn aufweisenden Richtung einer Bluetooth-Antenne der Anforderungseinrichtung befindet, um die erste Entfernung zu erhalten.

7. Verfahren nach Anspruch 6, wobei das Verarbeiten (S606), durch die Antworteinrichtung, der zweiten Entfernung, wenn bestimmt wird, dass die Antworteinrichtung sich in einer vorgegebenen Gewinn aufweisenden Richtung einer Bluetooth-Antenne der Anforderungseinrichtung befindet, Folgendes umfasst:
Multiplizieren (S606), durch die Antworteinrichtung, der zweiten Entfernung mit einem vorgegebenen Wert, wenn bestimmt wird, dass die Antworteinrichtung sich in einer maximalen Gewinn aufweisenden Richtung der Bluetooth-Antenne der Anforderungseinrichtung befindet, um die erste Entfernung zu erhalten.

8. Verfahren nach Anspruch 7, wobei der erste RSSI mindestens zwei RSSI-Parameter umfasst und das Verfahren ferner Folgendes umfasst:
Berechnen (S606), durch die Antworteinrichtung, einer Änderungsrate der mindestens zwei RSSI-Parameter; und,
wenn die Änderungsrate der mindestens zwei RSSI-Parameter einen vorgegebenen Schwellenwert überschreitet, Bestimmen (S606) durch die Antworteinrichtung, dass die Antworteinrichtung sich in der maximalen Gewinn aufweisenden Richtung der Bluetooth-Antenne der Anforderungseinrichtung befindet.

9. Verfahren nach einem der Ansprüche 1 bis 8, wobei das Messen (S602), durch die Antworteinrichtung, einer Signalstärke einer Entfernungsmessanforderung nach dem Empfangen der Entfernungsmessanforderung, die durch die Anforderungseinrichtung gesendet wird, um einen ersten Empfangssignalstärke-Indikator, RSSI, zu erhalten, Folgendes umfasst:
Messen (S602), durch die Antworteinrichtung, der Signalstärke der Entfernungsmessanforderung nach dem Empfangen der Entfernungsmessanforderung, die durch die Anforderungseinrichtung gesendet wird, um einen zweiten RSSI zu erhalten; und
Durchführen (S603), durch die Antworteinrichtung, einer Filterung an dem zweiten RSSI, um den ersten RSSI zu erhalten.

10. Bluetooth-Entfernungsmessverfahren, das Folgendes umfasst:
Herstellen (S801), durch eine Anforderungseinrichtung, einer Bluetooth-Kommunikationsverbindung zu einer Antworteinrichtung;
Senden (S802), durch die Anforderungseinrichtung, einer Parameteranforderung an die Antworteinrichtung, wobei die Parameteranforderung genutzt wird, um anzufordern, dass eine Signalstärke der Parameteranforderung gemessen wird, um einen ersten Empfangssignalstärke-Indikator, RSSI, zu erhalten;
Empfangen (S805), durch die Anforderungseinrichtung, des ersten RSSI, der durch die Antworteinrichtung gesendet wird; und
Erhalten (S806), durch die Anforderungseinrichtung, einer ersten Entfernung auf der Basis des ersten RSSI und eines Bluetooth-Entfernungsmessmodells, wobei das Bluetooth-Entfernungsmessmodell durch Anpassen auf der Basis einer Korrespondenz zwischen einer vorgegebenen Entfernung von der Anforderungseinrichtung und einem modifizierten RSSI bei der vorgegebenen Entfernung erhalten wird; und der modifizierte RSSI durch Verarbeiten mehrerer RSSIs, die an mehreren unterschiedlichen räumlichen Positionen in einer selben Entfernung von der Anforderungseinrichtung gemessen werden, wenn die Anforderungseinrichtung ein Bluetooth-Signal aussendet, und von Gewichten, die mit jeder der mehreren räumlichen Positionen korrespondieren, erhalten wird.

11. Verfahren nach Anspruch 10, wobei der modifizierte RSSI durch Addieren von Produkten erhalten wird, die erhalten werden, nachdem die mehreren RSSIs jeweils mit den Gewichten, die mit den mehreren räumlichen Positionen korrespondieren, multipliziert worden sind.

12. Verfahren nach Anspruch 10 oder 11, wobei, wenn die Antworteinrichtung sich an unterschiedlichen Positionen und in einer selben Entfernung von der Anforderungseinrichtung befindet, Werte der ersten Entfernung unterschiedlich sind.

13. Verfahren nach einem der Ansprüche 10 bis 12, wobei ein Gewicht der räumlichen Position auf der Basis von Positionsdaten der anderen Einrichtung erhalten wird, wenn ein Benutzer die Anforderungseinrichtung nutzt, um eine Bluetooth-Kommunikation mit einer anderen Einrichtung durchzuführen.

14. Elektronische Einrichtung (100-102, 200), wobei die elektronische Einrichtung (100-102, 200) einen oder mehrere Prozessoren und einen oder mehrere Speicher umfasst, der eine oder die mehreren Speicher mit dem einen oder den mehreren Prozessoren gekoppelt sind, der eine oder die mehreren Speicher konfiguriert sind, um Computerprogrammcode zu speichern, der Computerprogrammcode Computeranweisungen umfasst und, wenn der eine oder die mehreren Prozessoren die Computeranweisungen ausführen, ermöglicht wird, dass die elektronische Einrichtung (100-102, 200) das Verfahren nach einem der Ansprüche 1 bis 9 oder 10 bis 13 durchführt.

15. Computerlesbares Speichermedium, das Anweisungen umfasst, wobei, wenn die Anweisungen in einer elektronischen Einrichtung (100-102, 200) laufen gelassen werden, ermöglicht wird, dass die elektronische Einrichtung (100-102, 200) das Verfahren nach einem der Ansprüche 1 bis 9 oder 10 bis 13 durchführt.

## Revendications

1. Procédé de télémétrie Bluetooth, le procédé comprenant les étapes suivantes :
établir (S601), par un dispositif de réponse, une connexion de communication Bluetooth avec un dispositif de demande ;
mesurer (S602), par le dispositif de réponse, l'intensité du signal d'une demande de télémétrie après réception de ladite demande envoyée par le dispositif de demande, afin d'obtenir une première indication d'intensité du signal reçu, RSSI ;
obtenir (S605), par le dispositif de réponse, une première distance sur la base de la première RSSI et d'un modèle de télémétrie Bluetooth, dans lequel le modèle de télémétrie Bluetooth est obtenu par ajustement sur la base d'une correspondance entre une distance prédéfinie par rapport au dispositif de demande et une RSSI modifiée à ladite distance prédéfinie ; et la RSSI modifiée est obtenue en traitant une pluralité de RSSI mesurées en une pluralité de positions spatiales différentes à une même distance du dispositif de demande lorsque le dispositif de demande diffuse un signal Bluetooth, ainsi que des poids correspondant à chacune de la pluralité de positions spatiales ; et
envoyer (S608), par le dispositif de réponse, la première distance au dispositif de demande.

2. Procédé selon la revendication 1, dans lequel la RSSI modifiée est obtenue en additionnant les produits obtenus après que la pluralité de RSSI ont été respectivement multipliées par les poids correspondant à la pluralité de positions spatiales.

3. Procédé selon la revendication 1 ou la revendication 2, dans lequel, lorsque le dispositif de réponse se trouve à des positions différentes et à une même distance du dispositif de demande, les valeurs de la première distance sont différentes.

4. Procédé selon l'une quelconque des revendications 1 à 3, dans lequel, lorsque la position spatiale du dispositif de réponse par rapport au dispositif de demande est une première position spatiale, la première distance est d1, et le poids de la première position spatiale est un premier poids ; et lorsque la position spatiale du dispositif de réponse par rapport au dispositif de demande est une deuxième position spatiale, la première distance est d2, et le poids de la deuxième position spatiale est un deuxième poids, dans lequel le premier poids est supérieur au deuxième poids ; et
lorsque les distances entre la première position spatiale et la deuxième position spatiale et le dispositif de demande sont toutes deux d, une différence entre d1 et d est inférieure à une différence entre d2 et d, dans lequel d1, d2 et d sont tous des nombres positifs.

5. Procédé selon l'une quelconque des revendications 1 à 4, dans lequel une pondération de la position spatiale est obtenue, lorsqu'un utilisateur utilise le dispositif de demande pour effectuer une communication Bluetooth avec un autre dispositif, sur la base de données de position de l'autre dispositif.

6. Procédé selon l'une quelconque des revendications 1 à 5, dans lequel l'obtention (S605), par le dispositif de réponse, d'une première distance sur la base de la première RSSI et d'un modèle de télémétrie Bluetooth, comprend les étapes suivantes :
entrer (S605), par le dispositif de réponse, la première RSSI dans le modèle de télémétrie Bluetooth, afin d'obtenir une deuxième distance ; et
traiter (S606), par le dispositif de réponse, la deuxième distance lorsqu'il est déterminé que le dispositif de réponse est situé dans une direction de gain prédéfinie d'une antenne Bluetooth du dispositif de demande, afin d'obtenir la première distance.

7. Procédé selon la revendication 6, dans lequel le traitement (S606), par le dispositif de réponse, de la deuxième distance lorsqu'il est déterminé que le dispositif de réponse est situé dans une direction de gain prédéfinie d'une antenne Bluetooth du dispositif de demande comprend l'étape suivante :
multiplier (S606), par le dispositif de réponse, la deuxième distance par une valeur prédéfinie lorsqu'il est déterminé que le dispositif de réponse se trouve dans une direction de gain maximal de l'antenne Bluetooth du dispositif de demande, afin d'obtenir la première distance.

8. Procédé selon la revendication 7, dans lequel la première RSSI comprend au moins deux paramètres de RSSI, et le procédé comprend en outre les étapes suivantes :
calculer (S606), par le dispositif de réponse, un taux de variation desdits au moins deux paramètres de RSSI ; et
lorsque le taux de variation desdits au moins deux paramètres de RSSI dépasse un seuil prédéfini, déterminer (S606), par le dispositif de réponse, que le dispositif de réponse se trouve dans la direction de gain maximal de l'antenne Bluetooth du dispositif de demande.

9. Procédé selon l'une quelconque des revendications 1 à 8, dans lequel la mesure (S602), par le dispositif de réponse, de l'intensité du signal d'une demande de télémétrie après réception de la demande de télémétrie envoyée par le dispositif de demande, afin d'obtenir une première indication d'intensité du signal reçu, RSSI, comprend les étapes suivantes :
mesurer (S602), par le dispositif de réponse, l'intensité du signal de la demande de télémétrie après réception de la demande de télémétrie envoyée par le dispositif de demande, afin d'obtenir une deuxième RSSI ; et
réaliser (S603), par le dispositif de réponse, un filtrage sur la deuxième RSSI, afin d'obtenir la première RSSI.

10. Procédé de télémétrie Bluetooth, comprenant les étapes suivantes :
établir (S801), par un dispositif de demande, une connexion de communication Bluetooth avec un dispositif de réponse ;
envoyer (S802), par le dispositif de demande, une demande de paramètre au dispositif de réponse, dans lequel la demande de paramètre est utilisée pour demander la mesure de l'intensité du signal de la demande de paramètre afin d'obtenir une première indication d'intensité du signal reçu, RSSI ;
recevoir (S805), par le dispositif de demande, la première RSSI envoyée par le dispositif de réponse ; et
obtenir (S806), par le dispositif de demande, une première distance sur la base de la première RSSI et d'un modèle de télémétrie Bluetooth, dans lequel le modèle de télémétrie Bluetooth est obtenu par ajustement sur la base d'une correspondance entre une distance prédéfinie par rapport au dispositif de demande et une RSSI modifiée à ladite distance prédéfinie ; et la RSSI modifiée est obtenue en traitant une pluralité de RSSI mesurées à une pluralité de différentes positions spatiales à une même distance du dispositif de demande lorsque le dispositif de demande diffuse un signal Bluetooth, ainsi que des poids correspondant à chacune de la pluralité de positions spatiales.

11. Procédé selon la revendication 10, dans lequel le RSSI modifié est obtenu en additionnant les produits obtenus après que la pluralité de RSSI ont été respectivement multipliées par les poids correspondant à la pluralité de positions spatiales.

12. Procédé selon la revendication 10 ou la revendication 11, dans lequel, lorsque le dispositif de réponse se trouve à des positions différentes et à une même distance du dispositif de demande, les valeurs de la première distance sont différentes.

13. Procédé selon l'une quelconque des revendications 10 à 12, dans lequel un poids de la position spatiale est obtenu, lorsqu'un utilisateur utilise le dispositif de demande pour établir une communication Bluetooth avec un autre dispositif, sur la base des données de position de l'autre dispositif.

14. Dispositif électronique (100-102, 200), le dispositif électronique (100-102, 200) comprenant un ou plusieurs processeurs et une ou plusieurs mémoires, les une ou plusieurs mémoires étant couplées aux un ou plusieurs processeurs, les une ou plusieurs mémoires étant configurées pour stocker un code de programme informatique, le code de programme informatique comprenant des instructions informatiques et, lorsque les un ou plusieurs processeurs exécutent les instructions informatiques, le dispositif électronique (100-102, 200) est en mesure d'exécuter le procédé selon l'une quelconque des revendications 1 à 9 ou 10 à 13.

15. Support de stockage lisible par ordinateur, comprenant des instructions, dans lequel, lorsque les instructions sont exécutées sur un dispositif électronique (100-102, 200), le dispositif électronique (100-102, 200) peut mettre en œuvre le procédé selon l'une quelconque des revendications 1 à 9, ou 10 à 13.
